# EUROPEAN PATENT SPECIFICATION

(11) **EP 2 717 157 B1**
(45) Date of publication and mention of the grant of the patent: **29.09.2021**
(21) Application number: 12789726.2
(22) Date of filing: 12.04.2012
(51) Int. Cl.: G06F 9/451

(54) **METHOD FOR EDITING SKIN OF CLIENT AND SKIN EDITOR**
VERFAHREN ZUR BEARBEITUNG DER OBERFLÄCHE EINES CLIENTS UND OBERFLÄCHENEDITOR
PROCÉDÉ D'ÉDITION D'HABILLAGE DE CLIENT ET ÉDITEUR D'HABILLAGE

(30) Priority: 23.05.2011 CN 201110133928
(43) Date of publication of application: 09.04.2014
(73) Proprietor: Tencent Technology (Shenzhen) Company Limited, Shenzhen, Guangdong 518044 (CN)
(72) Inventor: ZHANG, Yanbing, Shenzhen Guangdong 518044 (CN); TU, Qiang, Shenzhen Guangdong 518044 (CN); WANG, Ni, Shenzhen Guangdong 518044 (CN); XIE, Xin, Shenzhen Guangdong 518044 (CN)
(74) Representative: AWA Sweden AB
(86) International application number: PCT/CN2012/073891
(87) International publication number: WO 2012/159508

(56) References cited:
- CN-A- 101 075 172
- CN-A- 101 470 604
- CN-A- 101 493 768
- CN-A- 101 561 747
- CN-A- 101 820 350
- CN-A- 101 976 194
- JP-A- 2009 276 931
- KR-A- 20040 029 751
- KR-A- 20080 017 776
- US-A1- 2011 090 248
- None

## Description

This application claims priority to a Chinese patent application 201110133928.3, titled "method for editing skin of client and skin editor", which was filed on May 23, 2011.

### Technical Field

The present disclosure relates to computer technologies and picture processing technologies, and more particularly, to a method for editing a skin of a client and a skin editor.

### Background of the Invention

Developing to nowadays, Instant Messaging (IM) tools have been accepted by the majority of network users. The IM tools have become indispensable software tools for users. An IM tool may implement an instant communication with Point-to-Point (P2P) technologies at Internet, or even group chat of several buddies.

At present, most of IM clients may provide a function of skin change. A user may select a favorite picture to be taken as background of a client, so as to make the user's client more personalized.

There may be two modes for displaying skin at an IM client, that is, tiling and edge padding.

The tiling refers to displaying a picture with an IM client from top to bottom, and from left to right. When size of an IM client is smaller than or equal to a picture size, the edge padding refers to displaying picture contents. When the size of the IM client is larger than the picture size, the edge padding refers to padding each part of the IM client extending the picture with a single color, which is an average color of the picture.

No matter employing the tiling mode or the edge padding mode, when changing a skin, it may start from a top left corner of a picture. Take the picture as a skin of an IM client and display the picture. For example, in the manner of edge padding, when picture size is larger than size of the IM client, it may take a top left part of the picture as the skin of the IM client and display the skin of the IM client. It may not take any part of the picture as the skin of the IM client. As another example, in the manner of tiling mode, a top left corner of a skin of an IM client may be a top left corner of a picture, which may not be any part of the picture.

Thus, it can be seen that existing skin change method is not flexible, which may not take any part of a picture as a skin of an IM client.

In addition to an IM client, an inflexible problem may also exist for another client when changing a skin.

KR 20080017776A discloses an image display method of a mobile terminal to enlarge and display a particular portion of an image being reproduced, to thus provide only a user desired portion as an image.

KR 20040029751A discloses a method for synthesizing a background picture with a photographed picture in a portable terminal having a camera, in which a color value of a photographed picture pixel is used if a bit of a bit mask pixel is 1, and a color value of a background picture pixel is used if the pixel bit of the bit mask is 0.

CN 101075172A discloses a method for cutting image, which includes confirming initialized selection region in background image of screen, recording movement trace of mouse in initialized selection region, confirming region enclosed by movement trace of mouse to be selection region and storing scope in background image of screen and corresponding to said selection region to be a selection image.

US 2011/090248A1 discloses an electronic device and method for image editing, which includes constructing a virtual wallpaper interface, including an image display area and a preview window.

CN 101976194A discloses a method for setting a user interface (UI), which includes acquiring and storing image data in a file of a selected background image on a UI management interface; marking spatial coordinates of divided areas with different shapes on the background image, processing a display effect of the divided areas with different shapes, outputting a display effect processed result; and recording a directory name of every preset icon and a corresponding menu link path.

### Summary of the Invention

In view of above, the present disclosure provides a method for editing a skin of a client and a skin editor, so as to improve flexibility for changing a skin of a client.

The invention is defined in the appended claims.

Based on the present technical solution, when moving a client snapshot on a displaying area of background picture, a location of the client snapshot on the displaying area of background picture is determined, an area picture covered by the client snapshot according to the location is intercepted, and the skin of the client is updated utilizing the area picture intercepted. Thus, any area of a background picture may be taken as a client skin. Subsequently, a client skin may not start from a top left corner of a background picture, and flexibility of skin change of a client may be improved. The technical solution provided by examples of the present disclosure may also be applied to skin change of an IM client and another client.

### Brief Descriptions of the Drawings

FIG.1 is a flowchart illustrating a method for editing a client skin, in accordance with an example of the present disclosure.
FIG.2 is a flowchart illustrating a method for previewing a skin, in accordance with an example of the present disclosure.
FIG.3 is a flowchart illustrating a method for editing a skin in the manner of edge padding, in accordance with an example of the present disclosure.
FIG.4 is a flowchart illustrating a method for displaying current background picture on a displaying area of background picture in the manner of edge padding, in accordance with an example of the present disclosure.
FIG. 5 is a flowchart illustrating a method for performing a transition process on contents displayed on a displaying area of background picture, in accordance with an example of the present disclosure.
FIG.6 is a schematic diagram illustrating a transition process performed on contents displayed on a displaying area of background picture, in accordance with an example of the present disclosure.
FIG.7 is a flowchart illustrating a method for editing a skin in the manner of tiling, in accordance with an example of the present disclosure.
FIG.8 is a flowchart illustrating a method for displaying current background picture on a displaying area of background picture in the manner of tiling, in accordance with an example of the present disclosure.
FIG.9 is a flowchart illustrating a method for intercepting an area picture in the manner of tiling, in accordance with an example of the present disclosure.
FIG. 10 is a schematic diagram illustrating a canvas used for intercepting an area picture in the manner of tiling, in accordance with an example of the present disclosure.
FIG. 11 is a schematic diagram illustrating structure of a skin editor of a client, in accordance with an example of the present disclosure.

### Embodiments of the Invention

In the following description, numerous specific details are set forth in order to provide a thorough understanding of the present disclosure. It will be readily apparent however, that the present disclosure may be practiced without limitation to these specific details. In other instances, some methods and structures have not been described in detail so as not to unnecessarily obscure the present disclosure. As used throughout the present disclosure, the term "includes" means includes but not limited to, the term "including" means including but not limited to. The term "based on" means based at least in part on. In addition, the terms "a" and "an" are intended to denote at least one of a particular element.

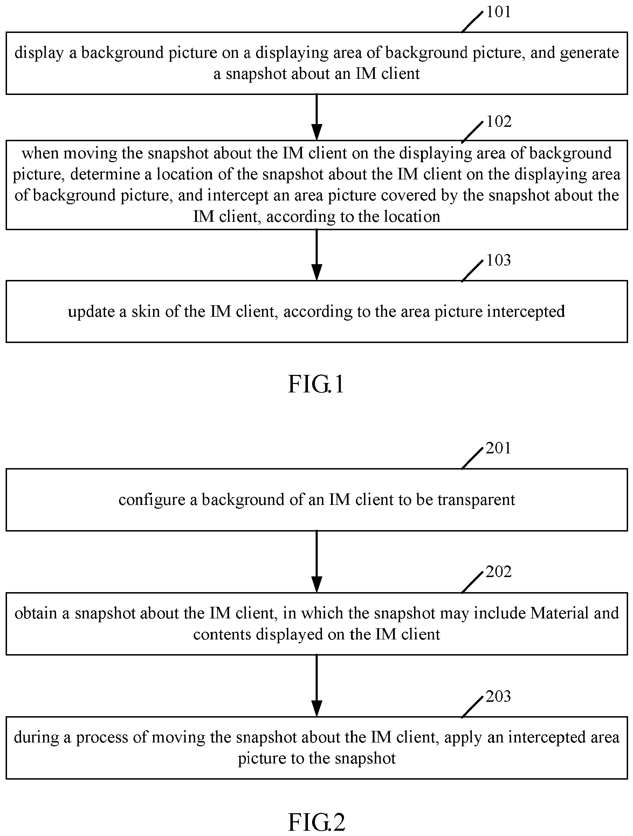

FIG.1 is a flowchart illustrating a method for editing a skin of an IM client, in accordance with the present disclosure.

As shown in FIG. 1, the method includes the following blocks.

Block 101, display a background picture on a displaying area of background picture, and generate a snapshot about an IM client.

Block 102, when moving the snapshot about the IM client on the displaying area of background picture, determine a location of the snapshot about the IM client on the displaying area of background picture, and intercept an area picture covered by the snapshot about the IM client, according to the location.

Block 103, update a skin of the IM client, according to the area picture intercepted.

By employing the method illustrated with FIG.1, any area of a picture may be intercepted to be taken as a skin of an IM client. Subsequently, flexibility for changing a skin of an IM client may be improved.

As an implementation mode, in accordance with the technical solution of the present disclosure, it is determined whether a displaying mode is tiling or edge padding, according to size of a background picture, and the background picture on a displaying area of background picture is displayed, according to the determined displaying mode. Generally speaking, when size of the background picture is much smaller than that of snapshot about an IM client, determine the displaying mode is tiling. When difference between size of the background picture and that of the IM client is relatively small, or size of the background picture is much larger than that of the IM client, determine the displaying mode is edge padding. The size of the IM client is the same as that of the snapshot about the IM client.

As another implementation mode, in accordance with the technical solution of the present disclosure, it may receive displaying mode information, and employ a corresponding displaying mode to display a background picture on a displaying area of background picture, according to the received displaying mode information. A user may select a displaying mode in the example.

To implement What You See Is What You Get (WYSIWYG), an example of the present disclosure also provides a technical solution to preview a skin in real time. In the process of intercepting an area picture, perform a picture synthesis on the intercepted area picture and the snapshot about the IM client, so as to form a skin to be previewed.

An Alpha value of a picture with an Alpha channel in an IM client is configured as 0, so as to preview a skin. Regarding the real-time skin preview, specific descriptions may be as follows.

Generally speaking, an IM client viewed by a user consists of three layers, that is, background, Material and contents displayed on the IM client. The Material be a picture with an Alpha channel. When performing an Alpha mixture on the Material and a background picture, effects of viewing the background picture is achieved by configuring Alpha value to be 0.

FIG.2 is a flowchart illustrating a method for previewing a skin, in accordance with an example of the present disclosure.

As shown in FIG.2, the method includes the following blocks.

Block 201, configure a background of an IM client to be transparent.

In the block, the background of the IM client may be transparent, when configuring Alpha value to be 0.

Block 202, obtain a snapshot about the IM client, at this time the snapshot may include Material and contents displayed on the IM client.

Block 203, during the process of moving the snapshot about the IM client, apply an intercepted area picture to the snapshot. At this time, the snapshot about the IM client may consist of three layers, that is, a background area picture intercepted, the Material and the contents displayed on the IM client. Thus, effects of skin preview may be achieved.

At present, modes for displaying a skin of an IM client includes edge padding or tiling. When employing the edge padding or tiling, the method illustrated with FIG.1 is employed to improve flexibility about skin change of an IM client.

Detailed descriptions about a skin editing method in the manner of edge padding and that in the manner of tiling are respectively provided in the following.

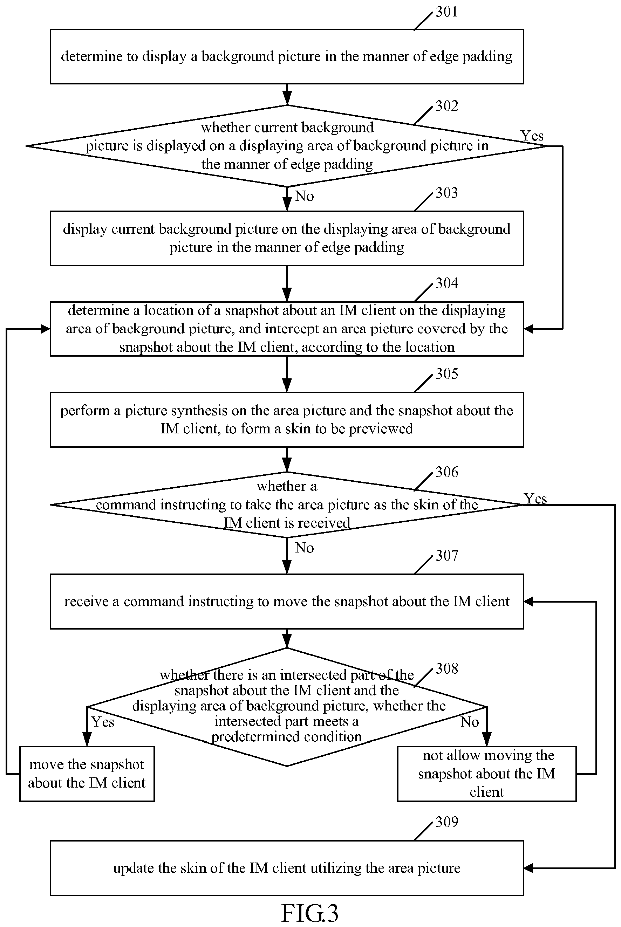

FIG.3 is a flowchart illustrating a method for editing a skin in the manner of edge padding, in accordance with an example of the present disclosure.

As shown in FIG.3, the method includes the following blocks.

Block 301, determine to employ an edge padding mode to display a background picture.

In the block, a user may select to employ the edge padding mode to display the background picture. Alternatively, a skin editor may automatically determine a displaying mode is the edge padding mode, according to a displaying area of background picture and size of the background picture.

Block 302, determine whether current background picture is displayed on the displaying area of background picture in the manner of edge padding; if yes, proceed with block 304; otherwise, proceed with block 303.

Block 303, display current background picture on the displaying area of background picture in the manner of edge padding.

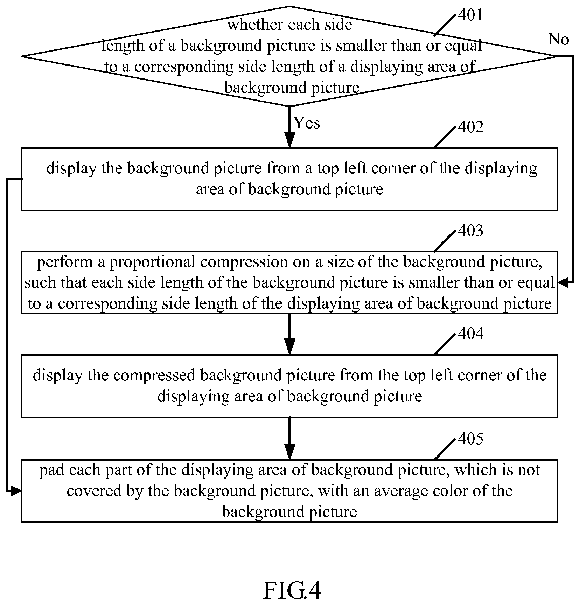

In the block, a method for displaying current background picture on the displaying area of background picture in the manner of edge padding may refer to FIG.4 to FIG.6.

Block 304, determine a location of a snapshot about an IM client on the displaying area of background picture, and intercept an area picture covered by the snapshot about the IM client, according to the location.

Block 305, perform a picture synthesis on the area picture and the snapshot about the IM client, to form a skin to be previewed.

Suppose a picture displaying area which may be intercepted is BkgRect, a snapshot area of an IM client is IMRect, in the block, when all the parts of IMRect are included in BkgRect, directly obtain intercepted picture contents, and utilize the picture contents to synthesize a skin to be previewed. When a part of IMRect is included in BkgRect, an intersected area of IMRect and BkgRect may employ the intercepted picture contents. Each part of IMRect moved out may be padded with an average color of the background picture. Utilize the intercepted picture contents and the average color to synthesize a skin to be previewed.

Block 306, determine whether a command instructing to take the area picture as the skin of the IM client is received; if yes, proceed with block 309; otherwise, proceed with block 307.

Block 307, receive a command instructing to move the snapshot about the IM client.

Block 308, determine whether there is a part intersected by the snapshot about the IM client and the displaying area of background picture, and whether an intersected part meets a predetermined condition. When there is the intersected part and the intersected part meets the predetermined condition, move the snapshot about the IM client according to the command received in block 307, and return to block 304. When there is no intersected part, or the intersected part doesn't meet the predetermined condition, not allow moving the snapshot about the IM client, and return to block 307, so as to continuously receive the command instructing to move the snapshot about the IM client.

In the block, generally speaking, the predetermined condition means there is a predetermined number of pixels intersected by a snapshot about an IM client and a displaying area of background picture. For example, there are at least 5 intersected pixels. A main reason for the intersected part to meet the predetermined condition is as follows. When needing to intercept a background picture, it is not allowed moving all the parts of the snapshot about the IM client out of the displaying area located by the background picture.

Block 309, utilize the area picture to update the skin of the IM client.

FIG.4 is a flowchart illustrating a method for displaying current background picture on a displaying area of background picture in the manner of edge padding, in accordance with the embodiment of the present disclosure.

As shown in FIG.4, the method includes the following blocks.

Block 401, determine whether each side length of a background picture is smaller than or equal to a corresponding side length of a displaying area of background picture, if yes, proceed with block 402; otherwise, proceed with block 403.

In the block, size of the background picture BkgSize and size of the displaying area of background picture BkgShowSize may be determined in advance. When length and width of the background picture is respectively smaller than or equal to length and width of the displaying area of background picture, that is, when BkgSize.cx≤BkgShowSize.cx and BkgSize.cy≤BkgShowSize.cy, proceed with block 402. When BkgSize.cx > BkgShowSize.cx or BkgSize.cy > BkgShowSize.cy, proceed with block 403.

Block 402, display the background picture from a top left corner of the displaying area of background picture, and proceed with block 405.

Block 403, perform a proportional compression on the size of the background picture, such that each side length of the background picture is smaller than or equal to a corresponding side length of the displaying area of background picture.

Block 404, display the compressed background picture from the top left corner of the displaying area of background picture.

Block 405, employ an average color of the background picture to pad each part of the displaying area of background picture, which is not covered by the background picture.

After displaying current background picture on the displaying area of background picture with the method illustrated with FIG.4, any area of the background picture may be intercepted and taken as a skin of an IM client.

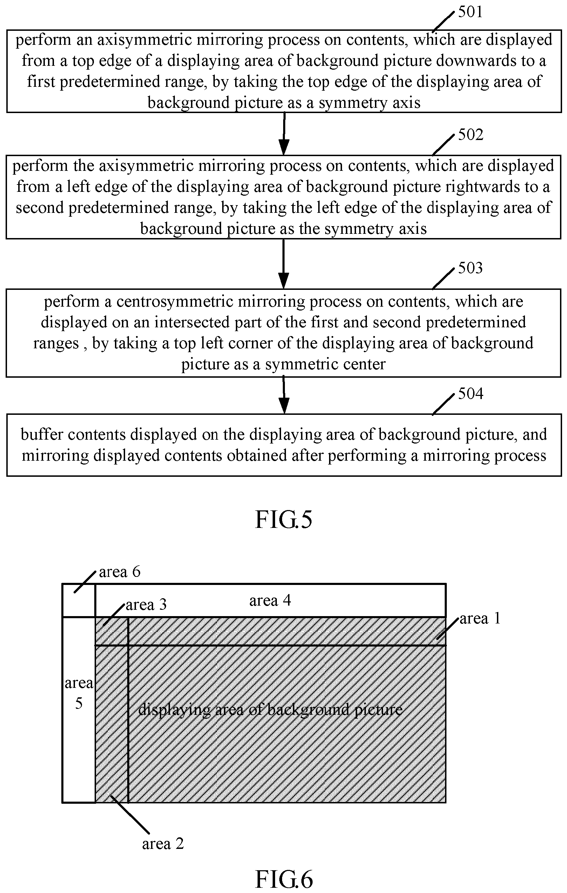

To further improve flexibility of skin change of an IM client, so as to slowly transit to a background picture, when a snapshot about an IM client is moved out of a displaying area of background picture, an example of the present disclosure may also provide a method for performing a transition process on contents displayed on the displaying area of background picture, which may refer to FIG. 5.

FIG. 5 is a flowchart illustrating a method for performing a transition process on contents displayed on a displaying area of background picture, in accordance with an example of the present disclosure.

As shown in FIG. 5, the method includes the following blocks.

Block 501, perform an axisymmetric mirroring process on contents displayed from a top edge of a displaying area of background picture downwards to a first predetermined range, by taking the top edge of the displaying area of background picture as a symmetry axis.

Block 502, perform the axisymmetric mirroring process on contents displayed from a left edge of the displaying area of background picture rightwards to a second predetermined range, by taking the left edge of the displaying area of background picture as the symmetry axis.

Block 503, perform a centrosymmetric mirroring process on contents displayed on a range intersected by the first predetermined range and the second predetermined range, by taking a top left corner of the displaying area of background picture as a symmetric center.

Sequence of blocks 501 to 503 may be changed. Blocks 501 to 503 may also be executed simultaneously.

Block 504, buffer contents displayed on the displaying area of background picture, and mirroring displayed contents obtained after performing a mirroring process.

When performing a transition process on contents displayed on a displaying area of background picture with the method illustrated with FIG. 5, the process of intercepting the area picture covered by the snapshot about the IM client in block 304 shown in FIG.3 may include the follows.

Intercept the contents displayed on the displaying area of background picture, and displayed contents covered by the snapshot about the IM client in the mirroring displayed contents.

FIG.6 is a schematic diagram illustrating a transition process performed on contents displayed on a displaying area of background picture, in accordance with an example of the present disclosure.

As shown in FIG.6, perform an up mirroring process on contents displayed from a top edge of a displaying area of background picture downwards to a predetermined range, that is, area 1, by taking the top edge of the displaying area of background picture as a symmetry axis, and obtain contents displayed on area 4. Perform a left mirroring process on contents displayed from a left edge of the displaying area of background picture rightwards to a predetermined range, that is, area 2, by taking the left edge of the displaying area of background picture as the symmetry axis, and obtain contents displayed on area 5. An intersected part of area 1 and area 2 is area 3. Perform a mirroring process on contents displayed on area 3, by taking a top left corner of the displaying area of background picture as a symmetric center, and obtain the contents displayed on area 6.

Based on a result of transition process illustrated with FIG.6, when employing the method illustrated with FIG.3 to intercept an area picture, the displaying area of background picture shown in FIG.6 as well as contents displayed on area 4, area 5 and area 6 may be intercepted.

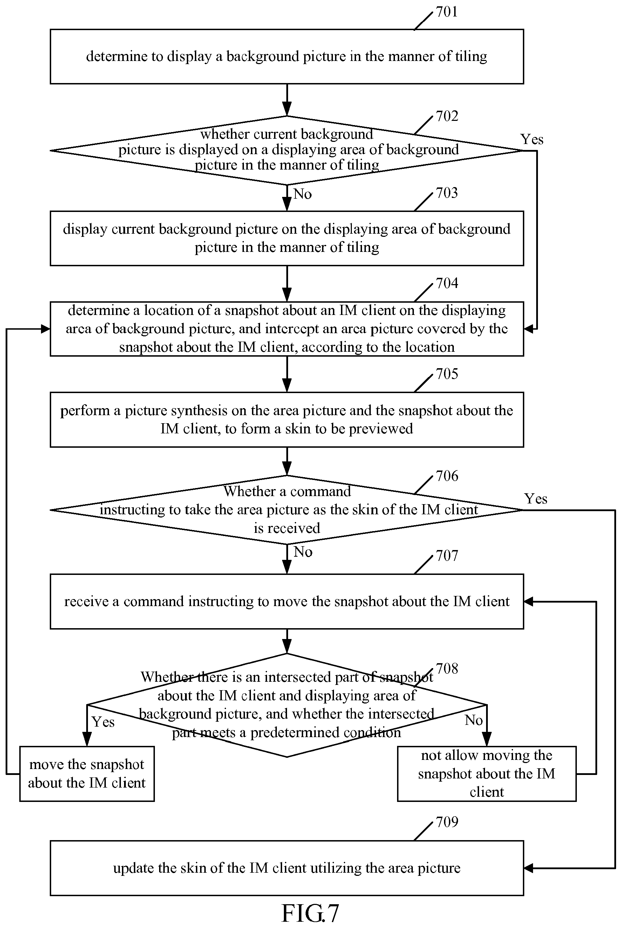

FIG.7 is a flowchart illustrating a method for editing a skin in the manner of tiling, in accordance with the embodiment of the present disclosure.

As shown in FIG.7, the method may include the following blocks.

Block 701, determine to employ a tiling mode to display a background picture.

In the block, a user may select to employ the tiling mode to display the background picture. Alternatively, a skin editor may automatically determine that a displaying mode is the tiling mode, according to size of a displaying area of background picture and size of the background picture.

Block 702, determine whether current background picture is displayed on the displaying area of background picture in the manner of tiling, if yes, proceed with block 704; otherwise, proceed with block 703.

Block 703, display current background picture on the displaying area of background picture in the manner of tiling.

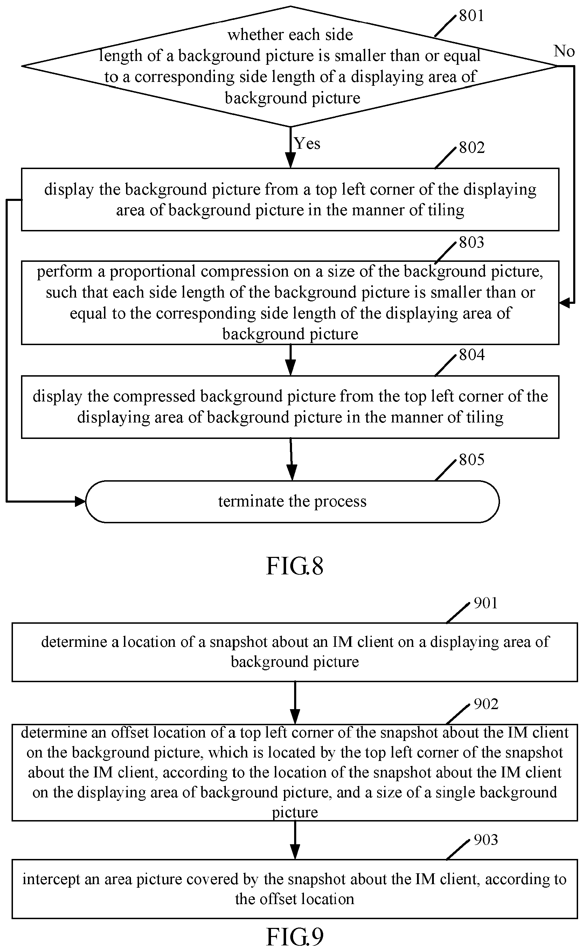

In the block, a method for displaying current background picture on the displaying area of background picture in the manner of tiling may refer to FIG.8.

Block 704, determine a location of a snapshot about an IM client on the displaying area of background picture, and intercept an area picture covered by the snapshot about the IM client, according to the location.

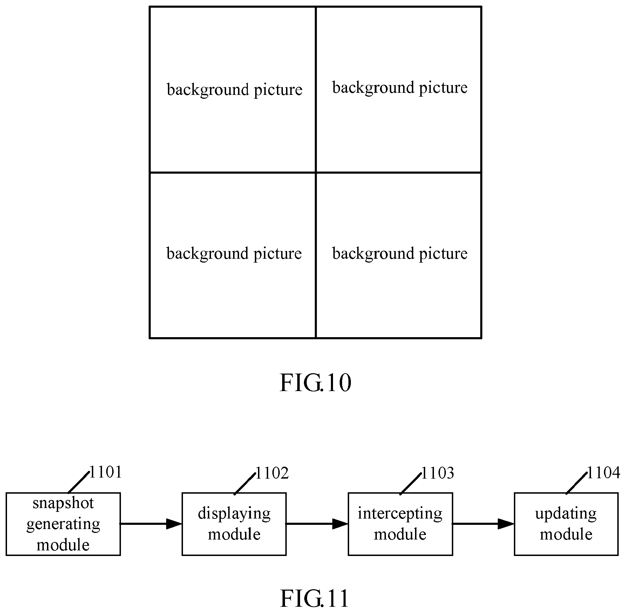

The specific implementation method about the block may refer to FIG.9 and FIG. 10.

Block 705, perform a picture synthesis on the area picture and the snapshot about the IM client, to form a skin to be previewed.

In the block, display the intercepted area picture on a snapshot area of the IM client in the manner of tiling, so as to form the skin to be previewed.

Block 706, determine whether a command instructing to take the area picture as the skin of the IM client is received; if yes, proceed with block 709; otherwise, proceed with block 707.

Block 707, receive a command instructing to move the snapshot about the IM client.

Block 708, determine whether there is an intersected part of the snapshot about the IM client and the displaying area of background picture, and whether the intersected part meets a predetermined condition. When there is an intersected part and the intersected part meets the predetermined condition, receive the command instructing to move the snapshot about the IM client according to block 707, and return to block 704. When there is no intersected part, or the intersected part doesn't meet the predetermined condition, not allow moving the snapshot about the IM client, and return back to block 707 to continuously receive the command instructing to move the snapshot about the IM client.

The block is the same as block 308.

Block 709, utilize the area picture to update the skin of the IM client.

In the block, update the skin of the IM client in the manner of tiling, by employing the intercepted area picture.

FIG.8 is a flowchart illustrating a method for displaying current background picture on a displaying area of background picture in the manner of tiling, in accordance with the embodiment of the present disclosure.

As shown in FIG. 8, the method includes the following blocks.

Block 801, determine whether each side length of a background picture is smaller than or equal to a corresponding side length of a displaying area of background picture; if yes, proceed with block 802; otherwise, proceed with block 803.

In the block, size of the background picture BkgSize and size of the displaying area of background picture BkgShowSize may be determined in advance. When length and width of the background picture is respectively smaller than or equal to length and width of the displaying area of background picture, that is, when BkgSize.cx≤BkgShowSize.cx and BkgSize.cy≤BkgShowSize.cy, proceed with block 802. When BkgSize.cx > BkgShowSize.cx or BkgSize.cy > BkgShowSize.cy, proceed with block 803.

Block 802, display the background picture from a top left corner of the displaying area of background picture in the manner of tiling, and terminate the process.

Block 803, perform a proportional compression on the size of the background picture, such that each side length of the background picture may be smaller than or equal to a corresponding side length of the displaying area of background picture.

Block 804, display the compressed background picture from the top left corner of the displaying area of background picture in the manner of tiling, and terminate the process.

FIG.9 is a flowchart illustrating a method for intercepting an area picture in the manner of tiling, in accordance with an example of the present disclosure.

As shown in FIG.9, the method may include the following blocks.

Block 901, determine a location of a snapshot about an IM client on a displaying area of background picture.

Block 902, determine an offset location of a top left corner of the snapshot about the IM client on the background picture, which is located by the top left corner of the snapshot about the IM client, according to the location of the snapshot about the IM client on the displaying area of background picture, and size of a single background picture.

In the block, suppose the displaying area of background picture is BkgRect, a snapshot area of the IM client is IMRect, and an area to be intercepted is ClipRect. ".left" may indicate a left border of a corresponding area. ".Width" may indicate a width of a corresponding area. ".right" may indicate a right edge of a corresponding area. ".top" may indicate a top edge of a corresponding edge. ".Height" may indicate a height of a corresponding area. ".bottom" may indicate a bottom edge of a corresponding area. The method for determining the offset location may include the follows.

When BkgRect.left <= IMRect.left, ClipRect.left = (IMRect.left - BkgRect.left) % Bkg.Width, and ClipRect.right = ClipRect.left + Bkg.Width.

When BkgRect.left > IMRect.left, ClipRect.left = (IMRect.left - BkgRect.left) % Bkg.Width + Bkg.Width, and ClipRect.right = ClipRect.left + Bkg.Width.

When BkgRect.top <= IMRect.top, ClipRect.top = (IMRect.top - BkgRect.top) % Bkg.Height, and ClipRect.bottom = ClipRect.top + Bkg.Height.

When BkgRect.top > IMRect.top, ClipRect.top = (IMRect.top ― BkgRect.top)%Bkg.Height + Bkg.Height, and ClipRect.bottom = ClipRect.top + Bkg.Height.

Symbol "%"may indicate a modulo operation.

Block 903, intercept an area picture covered by the snapshot about the IM client, according to the offset location.

In the block, the offset location may be taken as the top left corner of the area picture to be intercepted. Intercept the area picture from the contents displayed on the displaying area of background picture, according to size of a single background picture. To facilitate interception, a canvas may be generated in advance, and the area picture may be intercepted from the canvas, which may refer to FIG.10.

FIG. 10 is a schematic diagram illustrating a canvas used for intercepting an area picture in the manner of tiling, in accordance with an example of the present disclosure.

As shown in FIG. 10, 4 background pictures are tiled on a canvas in the manner of two rows and two columns.

First of all, determine a location of a top left corner of a snapshot about an IM client on a displaying area of background picture, and determine an offset location of the top left corner of the snapshot about the IM client on a background picture, which is located by the top left corner of the snapshot about the IM client, according to the offset location.

Subsequently, take the offset location of a background picture, which is located on the first row and first column of the canvas shown in FIG. 10, as the top left corner of the area picture to be intercepted. Intercept the area picture from the canvas, according to size of a single background picture.

FIG. 11 is a schematic diagram illustrating structure of a skin editor of an IM client, in accordance with the embodiment of the present disclosure.

As shown in FIG. 11, the skin editor includes a snapshot generating module 1101, a displaying module 1102, an intercepting module 1103 and an updating module 1104.

The snapshot generating module 1101 is configured to generate a snapshot about an IM client.

The displaying module 1102 is configured to display the snapshot about the IM client, and display a background picture on a displaying area of background picture.

The intercepting module 1103 is configured to determine a location of the snapshot about the IM client on the displaying area of background picture, when the snapshot about the IM client is moved on the displaying area of background picture, and is further configured to intercept an area picture covered by the snapshot about the IM client, according to the location.

The updating module 1104 is configured to update a skin of the IM client, according to the intercepted area picture.

The displaying module 1102 is further configured to determine whether a displaying mode is tiling or edge padding, according to the size of the background picture, or, receive information about the displaying mode, and display the background picture on the displaying area of background picture, according to the determined displaying mode or the received information about the displaying mode.

When the displaying mode is edge padding, and each side length of the background picture is smaller than or equal to a corresponding side length of the displaying area of background picture, the displaying module 1102 is further configured to display the background picture from a top left corner of the displaying area of background picture. When one side length of the background picture is larger than a corresponding side length of the displaying area of background picture, the displaying module 1102 may firstly perform a proportional compression on the size of the background picture, such that each side length of the background picture may be smaller than or equal to a corresponding side length of the displaying area of background picture. Subsequently, the displaying module 1102 may display the compressed background picture from the top left corner of the displaying area of background picture, and pad each part of the displaying area of background picture, which is not covered by the background picture, with an average color of the background picture.

The displaying module 1102 may include a mirroring module and a buffering module.

The mirroring module is configured to perform an axisymmetric mirroring process on contents, which are displayed from a top edge of the displaying area of background picture downwards to a first predetermined range, by taking the top edge of the displaying area of background picture as a symmetry axis. The mirroring module is further configured to perform the axisymmetric mirroring process on contents, which are displayed from a left edge of the displaying area of background picture rightwards to a second predetermined range, by taking the left edge of the displaying area of background picture as the symmetric axis. The mirroring module is further configured to perform a centrosymmetric mirroring process on contents, which are displayed on an intersected part of the first and second predetermined ranges, by taking the top left corner of the displaying area of background picture as a symmetric center.

The buffering module is configured to buffer the contents displayed on the displaying area of background picture, and mirroring displayed contents obtained after performing a mirroring process.

Correspondingly, the intercepting module 1103 may be configured to intercept the contents displayed on the displaying area of background picture, and displayed contents not covered by the snapshot about the IM client included in the mirroring displayed contents.

When the displaying mode is tiling, the displaying module 1102 may display the background picture from the top left corner of the displaying area of background picture, in the manner of tiling.

When the displaying mode is tiling, the intercepting module 1103 may determine an offset location of the top left corner of the snapshot about the IM client on a background picture, which is located by the top left corner of the snapshot about the IM client, according to the location of the snapshot about the IM client on the displaying area of background picture and size of a single background picture, and intercept the area picture covered by the snapshot about the IM client, according to the offset location.

When the displaying mode is tiling, the intercepting module 1103 is configured to generate a canvas, in which 4 background pictures are tiled on the canvas in the manner of two rows and two columns, take an offset location of a background picture located on the first row and first column as the top left corner of the area picture to be intercepted, and intercept the area picture from the canvas, according to the size of the single background picture.

The updating module 1104 is configured to update the skin of the IM client in the manner of tiling, by utilizing the area picture intercepted from the canvas.

The foregoing skin editor includes a previewing module.

The previewing module is configured to set an Alpha value of a picture with an Alpha channel in the IM client to be 0, and perform a picture synthesis on the area picture and the snapshot about the IM client, so as to form a skin to be previewed.

The foregoing skin editing method of an IM client and skin editor, which are provided by the embodiment of the present disclosure, may be applied to skin change of an IM client and another client.

Thus, it can be seen that by employing the skin editing method and skin editor provided by the embodiment of the present disclosure, when a user has selected a displaying mode or the skin editor has automatically determined the displaying mode, location of an area picture to be intercepted is selected by moving a client snapshot. Subsequently, the skin editor intercepts an area picture corresponding to the background picture, and synthesize the intercepted area picture and client snapshot, to generate the skin to be previewed. After the user has selected a favorite skin, that is, after receiving a command from the user instructing to take the area picture as the client skin, apply the intercepted area picture to the client to change the skin, such that the flexibility of skin change about a client may be greatly improved.

An example of the present disclosure also provides a machine readable storage medium, which may store instructions about the method for editing a client skin executable by a machine. Specifically speaking, a system or device with the storage medium may be provided. The storage medium may store software program codes to implement a function of any foregoing example. A computer (or a Central Processing Unit (CPU) or a Mini Processing Unit (MPU)) of the system or device may read and execute the program codes stored in the storage medium.

Under the circumstances, the program codes read from the storage medium may implement a function of any foregoing example. Thus, the program codes and the storage medium storing the program codes may form a part of the present disclosure.

The storage medium providing the program codes may include a soft disk, a fixed disk, a magnetooptical disk, a Compact Disk (CD) (such as CD-Read-Only Memory (CD-ROM), CD-Recordable (CD-R), CD-ReWritable (CD-RW), Digital Video Disc-ROM (DVD-ROM), DVD-Random Access Memory (DVD-RAM), DVD-RW, DVD+RW), a magnetic tape, a non-volatile memory card and an ROM. Alternatively, the program codes may be downloaded from a server computer via a communication network.

In addition, it should be noted that, a part of or all of the actual operations may be completed by executing the program codes read by a computer, or may be completed by an Operating System (OS) based on instructions of the program codes. Thus, a function of any foregoing example may be implemented.

In addition, it should be understood that, write the program codes read from the storage medium into a memory, which is set in an expansion broad inserted into a computer. Alternatively, write the program codes read from the storage medium to a memory, which is set in an expansion unit connecting with a computer. Subsequently, enable a CPU installed in the expansion board or an expansion unit to execute a part of or all of the actual operations, based on the instructions of the program codes.

## Claims

1. A method for editing a skin of a client, comprising:
displaying a background picture on a displaying area of background picture (101);
configuring a background of the client to be transparent, and generating a client snapshot (101), wherein the client snapshot is smaller than the displaying area of background picture;
when moving the client snapshot on the displaying area of background picture, determining a location of the client snapshot on the displaying area of background picture, intercepting an area picture covered by the client snapshot according to the location (102) creating a preview of the edited skin; and
updating the skin of the client according to the intercepted area picture (103);
wherein displaying the background picture on the displaying area of background picture comprises:
determining whether a displaying mode is tiling or edge padding, according to a size of the background picture; or
receiving information about the displaying mode; and
displaying the background picture on the displaying area of background picture, according to the determined displaying mode or the received information about the displaying mode,
wherein the step of intercepting comprises performing a picture synthesis on the
area picture and the client snapshot and further comprising, when the displaying mode is the edge padding, and all parts of an area of the client snapshot are included in an area of the intercepted area picture, obtaining intercepted area picture contents, and utilizing the obtained intercepted area picture contents to form a preview of the edited skin ;
when the displaying mode is the edge padding, and a part of an area of the client snapshot is included in the area of the intercepted area picture, obtaining the intercepted area picture content, and utilizing the obtained intercepted area picture content and average color of the background picture to form a preview of the edited skin; or
when the displaying mode is the tiling, displaying the intercepted area picture on an area of the client snapshot in a manner of tiling, to form a preview of the edited skin , and
wherein updating the skin of the client according to the intercepted area picture comprises:
when receiving a command from the user instructing to take the intercepted area picture as the skin of the client, utilizing the intercepted area picture to update the skin of the client (309, 709).

2. The method according to claim 1, wherein when the displaying mode is the edge padding, displaying the background picture comprises:
when each side length of the background picture is smaller than or equal to a corresponding side length of the displaying area of background picture, displaying the background picture from a top left corner of the displaying area of background picture (402);
when one side length of the background picture is larger than a corresponding side length of the displaying area of background picture, performing a proportional compression on the size of the background picture, such that the each side length of the background picture is smaller than or equal to the corresponding side length of the displaying area of background picture (403), and displaying the compressed background picture from the top left corner of the displaying area of background picture (404); and
padding each part of the displaying area of background picture, which is not covered by the background picture, with an average color of the background picture (405).

3. The method according to claim 1, wherein when the displaying mode is the edging padding, displaying the background picture comprises:
performing an axisymmetric mirroring process on contents displayed from a top edge of the displaying area of background picture downwards to a first predetermined range, by taking the top edge of the displaying area of background picture as a symmetry axis (501);
performing the axisymmetric mirroring process on contents displayed from a left edge of the displaying area of background picture rightwards to a second predetermined range, by taking the left edge of the displaying area of background picture as the symmetry axis (502);
performing a centrosymmetric mirroring process on contents displayed on an intersected part of the first and second predetermined ranges, by taking the top left corner of the displaying area of background picture as a symmetric center (503);
buffering contents displayed on the displaying area of background picture, and mirroring displayed contents obtained after performing a mirroring process (504);
wherein intercepting the area picture covered by the client snapshot comprises:
intercepting the contents displayed on the displaying area of background picture, and displayed contents, which are included in the mirroring displayed contents and covered by the client snapshot.

4. The method according to claim 1, wherein when the displaying mode is the tiling, displaying the background picture comprises:
displaying the background picture from the top left corner of the displaying area of background picture, in the manner of the tiling;
wherein intercepting the area picture covered by the client snapshot comprises:
determining an offset location of the top left corner of the client snapshot on the background picture, which is located by the top left corner of the client snapshot, according to the location of the client snapshot on the displaying area of background picture, and a size of a single background picture (902), and intercepting the area picture covered by the client snapshot, according to the offset location (903).

5. The method according to claim 4, wherein intercepting the area picture covered by the client snapshot according to the offset location comprises:
generating a canvas in advance, wherein 4 background pictures are tiled on the canvas in the manner of two rows and two columns;
taking the offset location, which is located on the first row and first column of the background picture, as the top left corner of the area picture to be intercepted; and
intercepting the area picture from the canvas, according to the size of the single background picture;
wherein displaying the intercepted area picture on an area of the client snapshot in a manner of tiling, to form a preview of the edited skin comprises:
updating the skin of the client in the manner of the tiling, by utilizing the area picture intercepted from the canvas.

6. The method according to claim 1, further comprising:
during a process of moving the client snapshot, determining whether there is a predetermined number of pixels overlapped by the client snapshot and the displaying area of background picture;
when determining there is a predetermined number of pixels overlapped by the client snapshot and the displaying area of background picture, allowing moving the client snapshot;
when determining there is no predetermined number of pixel overlapped by the client snapshot and the displaying area of background picture, forbidding moving the client snapshot.

7. The method according to claim 1, wherein configuring a background of the client to be transparent comprises:
configuring an Alpha value of a picture with an Alpha channel in the client to be 0.

8. A skin editor of a client, comprising a snapshot generating module, a displaying module, an intercepting module and an updating module; wherein
the snapshot generating module (1101) is configured to configure a background of the client to be transparent, and generate a client snapshot, wherein the client snapshot is smaller than the displaying area of background picture;
the displaying module (1102) is configured to display the client snapshot, and display a background picture on a displaying area of background picture;
the intercepting module (1103) is configured to determine a location of the client snapshot on the displaying area of background picture, when the client snapshot is moved on the displaying area of background picture, and intercept an area picture covered by the client snapshot creating a preview of the edited skin, according to the location; and
the updating module (1104) is configured to update a skin of the client, according to the intercepted area picture;
wherein the displaying module is further configured to determine whether a displaying mode is tiling or edge padding, according to a size of the background picture, or, receive information about the displaying mode, and display the background picture on the displaying area of background picture, according to the determined displaying mode or the received information about the displaying mode;
wherein the skin editor further comprises a previewing module, configured to when the displaying mode is the edge padding, and all parts of an area of the client snapshot are included in an area of the intercepted area picture, obtain intercepted area picture contents, and utilize the obtained intercepted area picture contents to form a preview of the edited skin; when the displaying mode is the edge padding, and a part of an area of the client snapshot is included in the area of the intercepted area picture, obtain the intercepted area picture content, and utilize the obtained intercepted area picture content and average color of the background picture to form a preview of the edited skin; or, when the displaying mode is the tiling, display the intercepted area picture on an area of the client snapshot in an manner of tiling, to form to form a preview of the edited skin;
the updating module (1104) is configured to when receiving a command from the user instructing to take the intercepted area picture as the skin of the client, utilize the intercepted area picture to update the skin of the client.

9. The skin editor according to claim 8, wherein
when the displaying mode is the edge padding, and each side length of the background picture is smaller than or equal to a corresponding side length of the displaying area of background picture, the displaying module is further configured to display the background picture from a top left corner of the displaying area of background picture;
when one side length of the background picture is larger than a corresponding side length of the displaying area of background picture, the displaying module is further configured to perform a proportional compression on the size of the background picture, such that the each side length of the background picture is smaller than or equal to the corresponding side length of the displaying area of background picture, and the displaying module is further configured to display the compressed background picture from the top left corner of the displaying area of background picture, and pad each part of the displaying area of background picture, which is not covered by the background picture, with an average color of the background picture.

10. The skin editor according to claim 8, wherein the displaying module comprises a mirroring module and a buffering module,
the mirroring module is configured to perform an axisymmetric mirroring process on contents, which are displayed from a top edge of the displaying area of background picture downwards to a first predetermined range, by taking the top edge of the displaying area of background picture as a symmetry axis;
the mirroring module is further configured to perform the axisymmetric mirroring process on contents, which are displayed from a left edge of the displaying area of background picture rightwards to a second predetermined range, by taking the left edge of the displaying area of background picture as the symmetry axis;
the mirroring module is further configured to perform a centrosymmetric mirroring process on contents, which are displayed on an intersected part of the first and second predetermined ranges, by taking the top left corner of the displaying area of background picture as a symmetric center;
the buffering module is configured to buffer contents displayed on the displaying area of background picture, and mirroring displayed contents obtained after performing a mirroring process; and
the intercepting module is further configured to intercept the contents displayed on the displaying area of background picture, and displayed contents, which are included in the mirroring displayed contents and covered by the client snapshot.

11. The skin editor according to claim 8, wherein
when the displaying mode is the tiling, the displaying module is further configured to display the background picture from a top left corner of the displaying area of background picture, in the manner of the tiling;
when the displaying mode is the tiling, the intercepting module is further configured to determine an offset location of the top left corner of the client snapshot on the background picture, which is located by the top left corner of the client snapshot, according to the location of the client snapshot on the displaying area of background picture, and a size of a single background picture, and intercept the area picture covered by the client snapshot according to the offset location.

12. The skin editor according to claim 11, wherein
when the displaying mode is the tiling, the intercepting module is further configured to generate a canvas, wherein 4 background pictures are tiled on the canvas in the manner of two rows and two columns, take an offset location, which is located on the first row and first column of the background picture, as the top left corner of the area picture to be intercepted, and intercept the area picture from the canvas, according to the size of the single background picture; and
the updating module is further configured to update the skin of the client in the manner of the tiling, by utilizing the area picture intercepted from the canvas.

## Patentansprüche

1. Verfahren zur Bearbeitung einer Oberfläche eines Clients, umfassend:
Anzeigen eines Hintergrundbildes auf einem Anzeigebereich des Hintergrundbildes (101);
Konfigurieren eines Hintergrunds des Clients, so dass er transparent ist, und Erzeugen eines Client-Schnappschusses (101), wobei der Client-Schnappschuss kleiner ist als der Anzeigebereich des Hintergrundbildes;
wenn der Client-Schnappschuss auf dem Anzeigebereich des Hintergrundbildes bewegt wird, Bestimmen einer Position des Client-Schnappschusses auf dem Anzeigebereich des Hintergrundbildes, entsprechend der Position (102) Abfangen eines Bereichsbilds, das durch den Client-Schnappschuss, der eine Vorschau der bearbeiteten Oberfläche erzeugt, bedeckt wird; und
Aktualisieren der Oberfläche des Clients entsprechend dem abgefangenen Bereichsbild (103);
wobei das Anzeigen des Hintergrundbildes auf dem Anzeigebereich des Hintergrundbildes umfasst:
Bestimmen, ob ein Anzeigemodus Kachelung oder Randauffüllung ist, entsprechend einer Größe des Hintergrundbildes; oder
Empfangen von Informationen über den Anzeigemodus; und
Anzeigen des Hintergrundbildes auf dem Anzeigebereich des Hintergrundbildes, entsprechend dem bestimmten Anzeigemodus oder der empfangenen Informationen über den Anzeigemodus,
wobei der Schritt des Abfangens ein Durchführen einer Bildsynthese an dem Bereichsbild und dem Client-Schnappschuss umfasst, und ferner, wenn der Anzeigemodus die Randauffüllung ist und sämtliche Teile eines Bereichs des Client-Schnappschusses in einem Bereich des abgefangenen Bereichsbildes enthalten sind, ein Gewinnen von Inhalten des abgefangenen Bereichsbildes und ein Verwenden der gewonnenen Inhalte des abgefangenen Bereichsbildes zum Bilden einer Vorschau der bearbeiteten Oberfläche umfasst;
wenn der Anzeigemodus die Randauffüllung ist und ein Teil eines Bereichs des Client-Schnappschusses in dem Bereich des abgefangenen Bereichsbildes enthalten ist, Gewinnen des Inhalts des abgefangenen Bereichsbildes und Verwenden des gewonnenen Inhalts des abgefangenen Bereichsbildes und der durchschnittlichen Farbe des Hintergrundbildes, um eine Vorschau der bearbeiteten Oberfläche zu bilden; oder
wenn der Anzeigemodus die Kachelung ist, Anzeigen des abgefangenen Bereichsbildes auf einem Bereich des Client-Schnappschusses in einer Art Kachelung, um eine Vorschau der bearbeiteten Oberfläche zu bilden, und
wobei das Aktualisieren der Oberfläche des Clients entsprechend dem abgefangenen Bereichsbild umfasst:
wenn von dem Benutzer her ein Befehl empfangen wird, der anweist, das abgefangene Bereichsbild als die Oberfläche des Clients zu nehmen, Verwenden des abgefangenen Bereichsbildes, um die Oberfläche des Clients zu aktualisieren (309, 709).

2. Verfahren nach Anspruch 1, wobei das Anzeigen des Hintergrundbildes, wenn der Anzeigemodus die Randauffüllung ist, Folgendes umfasst:
wenn jede Seitenlänge des Hintergrundbildes kleiner oder gleich einer entsprechenden Seitenlänge des Anzeigebereichs des Hintergrundbildes ist, Anzeigen des Hintergrundbildes von einer oberen linken Ecke des Anzeigebereichs des Hintergrundbildes (402) an;
wenn eine Seitenlänge des Hintergrundbildes größer als eine entsprechende Seitenlänge des Anzeigebereichs des Hintergrundbildes ist, Durchführen einer proportionalen Komprimierung der Größe des Hintergrundbildes, so dass jede Seitenlänge des Hintergrundbildes kleiner als oder gleich der entsprechenden Seitenlänge des Anzeigebereichs des Hintergrundbildes (403) ist, und Anzeigen des komprimierten Hintergrundbildes von der oberen linken Ecke des Anzeigebereichs des Hintergrundbildes (404) an; und
Auffüllen jedes Teils des Anzeigebereichs des Hintergrundbildes, der nicht von dem Hintergrundbild bedeckt ist, mit einer durchschnittlichen Farbe des Hintergrundbildes (405).

3. Verfahren nach Anspruch 1, wobei das Anzeigen des Hintergrundbildes, wenn der Anzeigemodus die Randauffüllung ist, Folgendes umfasst:
Durchführen eines achsensymmetrischen Spiegelungsvorgangs an den angezeigten Inhalten von einem oberen Rand des Anzeigebereichs des Hintergrundbildes abwärts bis zu einem ersten vorbestimmten Bereich, indem der obere Rand des Anzeigebereichs des Hintergrundbildes als eine Symmetrieachse (501) verwendet wird;
Durchführen des achsensymmetrischen Spiegelungsvorgangs an Inhalten, die von einem linken Rand des Anzeigebereichs des Hintergrundbildes nach rechts zu einem zweiten vorbestimmten Bereich angezeigt werden, indem der linke Rand des Anzeigebereichs des Hintergrundbildes als die Symmetrieachse (502) verwendet wird;
Durchführen eines zentralsymmetrischen Spiegelungsvorgangs an Inhalten, die auf einem sich überschneidenden Teil des ersten und zweiten vorbestimmten Bereichs angezeigt werden, indem die obere linke Ecke des Anzeigebereichs des Hintergrundbildes als ein Symmetriezentrum (503) verwendet wird;
Puffern von Inhalten, die auf dem Anzeigebereich des Hintergrundbildes angezeigt werden, und Spiegeln von angezeigten Inhalten, die nach dem Durchführen eines Spiegelungsvorgangs (504) gewonnen werden;
wobei das Abfangen des Bereichsbildes, das durch den Client-Schnappschuss bedeckt wird, umfasst:
Abfangen der Inhalte, die auf dem Anzeigebereich des Hintergrundbildes angezeigt werden, und angezeigter Inhalte, die in den gespiegelten angezeigten Inhalten enthalten sind und durch den Client-Schnappschuss bedeckt werden.

4. Verfahren nach Anspruch 1, wobei das Anzeigen des Hintergrundbildes, wenn der Anzeigemodus die Kachelung ist, Folgendes umfasst:
Anzeigen des Hintergrundbildes von der oberen linken Ecke des Anzeigebereichs des Hintergrundbildes an, in der Art der Kachelung;
wobei das Abfangen des Bereichsbildes, das durch den Client-Schnappschuss bedeckt wird, umfasst:
Bestimmen einer Versatzposition der oberen linken Ecke des Client-Schnappschusses auf dem Hintergrundbild, die durch die obere linke Ecke des Client-Schnappschusses entsprechend der Position des Client-Schnappschusses auf dem Anzeigebereich des Hintergrundbildes und einer Größe eines einzelnen Hintergrundbildes (902) verortet ist, und Abfangen des Bereichsbildes, das durch den Client-Schnappschuss bedeckt wird, entsprechend der Versatzposition (903).

5. Verfahren nach Anspruch 4, wobei das Abfangen des Bereichsbildes, das von dem Client-Schnappschuss entsprechend der Versatzposition bedeckt wird, Folgendes umfasst:
Erzeugen einer Arbeitsfläche im Voraus, wobei 4 Hintergrundbilder auf der Arbeitsfläche in der Art von zwei Zeilen und zwei Spalten gekachelt werden;
Nehmen der Versatzposition, die auf der ersten Zeile und der ersten Spalte des Hintergrundbildes verortet ist, als die obere linke Ecke des abzufangenden Bereichsbildes; und
Abfangen des Bereichsbildes von der Arbeitsfläche, entsprechend der Größe des einzelnen Hintergrundbildes;
wobei das Anzeigen des abgefangenen Bereichsbildes auf einem Bereich des Client-Schnappschusses in einer Art Kachelung, um eine Vorschau der bearbeiteten Oberfläche zu bilden, Folgendes umfasst:
Aktualisieren der Oberfläche des Clients in der Art der Kachelung, indem das Bereichsbild verwendet wird, das von der Arbeitsfläche abgefangen wird.

6. Verfahren nach Anspruch 1, ferner umfassend:
während eines Vorgangs des Bewegens des Client-Schnappschusses, Bestimmen, ob es eine vorbestimmte Anzahl von Pixeln gibt, die von dem Client-Schnappschuss und dem Anzeigebereich des Hintergrundbildes überlappt werden;
wenn bestimmt wird, dass es eine vorbestimmte Anzahl von Pixeln gibt, die von dem Client-Schnappschuss und dem Anzeigebereich des Hintergrundbildes überlappt werden, Zulassen einer Bewegung des Client-Schnappschusses;
wenn bestimmt wird, dass es keine vorbestimmte Anzahl von Pixeln gibt, die von dem Client-Schnappschuss und dem Anzeigebereich des Hintergrundbildes überlappt werden, Unterbinden einer Bewegung des Client-Schnappschusses.

7. Verfahren nach Anspruch 1, wobei das Konfigurieren eines Hintergrunds des Clients, so dass er transparent ist, Folgendes umfasst:
Konfigurieren eines Alphawertes eines Bildes mit einem Alphakanal in dem Client auf 0.

8. Oberflächeneditor eines Clients, ein Schnappschuss-Erzeugungsmodul, ein Anzeigemodul, ein Abfangmodul und ein Aktualisierungsmodul aufweisend; wobei
das Schnappschuss-Erzeugungsmodul (1101) konfiguriert ist, um einen Hintergrund des Clients so zu konfigurieren, dass er transparent ist, und einen Client-Schnappschuss zu erzeugen, wobei der Client-Schnappschuss kleiner als der Anzeigebereich des Hintergrundbildes ist;
das Anzeigemodul (1102) konfiguriert ist, um den Client-Schnappschuss anzuzeigen und ein Hintergrundbild auf einem Anzeigebereich des Hintergrundbildes anzuzeigen;
das Abfangmodul (1103) konfiguriert ist, um eine Position des Client-Schnappschusses auf dem Anzeigebereich des Hintergrundbildes zu bestimmen, wenn der Client-Schnappschuss auf dem Anzeigebereich des Hintergrundbildes bewegt wird, und entsprechend der Position ein Bereichsbild abzufangen, das von dem Client-Schnappschuss, der eine Vorschau der bearbeiteten Oberfläche erzeugt, bedeckt wird; und
das Aktualisierungsmodul (1104) konfiguriert ist, um eine Oberfläche des Clients entsprechend dem abgefangenen Bereichsbild zu aktualisieren;
wobei das Anzeigemodul ferner konfiguriert ist, um entsprechend einer Größe des Hintergrundbildes zu bestimmen, ob ein Anzeigemodus Kachelung oder Randauffüllung ist, oder um Informationen über den Anzeigemodus zu empfangen, und das Hintergrundbild auf dem Anzeigebereich des Hintergrundbildes entsprechend dem bestimmten Anzeigemodus oder den empfangenen Informationen über den Anzeigemodus anzuzeigen;
wobei der Oberflächeneditor ferner ein Vorschaumodul aufweist, das konfiguriert ist, um, wenn der Anzeigemodus die Randauffüllung ist und sämtliche Teile eines Bereichs des Client-Schnappschusses in einem Bereich des abgefangenen Bereichsbildes enthalten sind, Inhalte des abgefangenen Bereichsbildes zu gewinnen und die gewonnenen Inhalte des abgefangenen Bereichsbildes zu verwenden, um eine Vorschau der bearbeiteten Oberfläche zu bilden; wenn der Anzeigemodus die Randauffüllung ist und ein Teil eines Bereichs des Client-Schnappschusses in dem Bereich des abgefangenen Bereichsbildes enthalten ist, Inhalte des abgefangenen Bereichsbildes zu gewinnen und die gewonnenen Inhalte des abgefangenen Bereichsbildes und die durchschnittliche Farbe des Hintergrundbildes zu verwenden, um eine Vorschau der bearbeiteten Oberfläche zu bilden; oder, wenn der Anzeigemodus die Kachelung ist, das abgefangene Bereichsbild auf einem Bereich des Client-Schnappschusses in einer Art Kachelung anzuzeigen, um eine Vorschau der bearbeiteten Oberfläche zu bilden;
das Aktualisierungsmodul (1104) so konfiguriert ist, dass es, wenn es einen Befehl von dem Benutzer empfängt, der anweist, das abgefangene Bereichsbild als die Oberfläche des Clients zu nehmen, das abgefangene Bereichsbild verwendet, um die Oberfläche des Clients zu aktualisieren.

9. Oberflächeneditor nach Anspruch 8, wobei
wenn der Anzeigemodus die Randauffüllung ist und jede Seitenlänge des Hintergrundbildes kleiner oder gleich einer entsprechenden Seitenlänge des Anzeigebereichs des Hintergrundbildes ist, das Anzeigemodul ferner konfiguriert ist, um das Hintergrundbild von einer oberen linken Ecke des Anzeigebereichs des Hintergrundbildes an anzuzeigen;
wenn eine Seitenlänge des Hintergrundbildes größer als eine entsprechende Seitenlänge des Anzeigebereichs des Hintergrundbildes ist, das Anzeigemodul ferner konfiguriert ist, um eine proportionale Komprimierung auf die Größe des Hintergrundbildes durchzuführen, so dass die jeweilige Seitenlänge des Hintergrundbildes kleiner oder gleich der entsprechenden Seitenlänge des Anzeigebereichs des Hintergrundbildes ist, und das Anzeigemodul ferner konfiguriert ist, um das komprimierte Hintergrundbild von der oberen linken Ecke des Anzeigebereichs des Hintergrundbildes an anzuzeigen und jeden Teil des Anzeigebereichs des Hintergrundbildes, der nicht durch das Hintergrundbild bedeckt ist, mit einer durchschnittlichen Farbe des Hintergrundbildes aufzufüllen.

10. Oberflächeneditor nach Anspruch 8, wobei das Anzeigemodul ein Spiegelungsmodul und ein Pufferungsmodul aufweist,
das Spiegelungsmodul konfiguriert ist, um einen achsensymmetrischen Spiegelungsvorgang an Inhalten durchzuführen, die von einem oberen Rand des Anzeigebereichs des Hintergrundbildes an abwärts bis zu einem ersten vorbestimmten Bereich angezeigt werden, indem der obere Rand des Anzeigebereichs des Hintergrundbildes als Symmetrieachse verwendet wird;
das Spiegelungsmodul ferner konfiguriert ist, um den achsensymmetrischen Spiegelungsvorgang an Inhalten durchzuführen, die von einem linken Rand des Anzeigebereichs des Hintergrundbildes an nach rechts bis zu einem zweiten vorbestimmten Bereich angezeigt werden, indem der linke Rand des Anzeigebereichs des Hintergrundbildes als die Symmetrieachse verwendet wird;
das Spiegelungsmodul ferner konfiguriert ist, um einen zentralsymmetrischen Spiegelungsvorgang an Inhalten durchzuführen, die auf einem sich überschneidenden Teil des ersten und des zweiten vorbestimmten Bereichs angezeigt werden, indem die obere linke Ecke des Anzeigebereichs des Hintergrundbilds als ein Symmetriezentrum verwendet wird;
das Pufferungsmodul konfiguriert ist, um Inhalte zu puffern, die auf dem Anzeigebereich des Hintergrundbildes angezeigt werden, und angezeigte Inhalte zu spiegeln, die nach dem Durchführen eines Spiegelungsvorgangs gewonnen werden; und
das Abfangmodul ferner so konfiguriert ist, um die Inhalte, die auf dem Anzeigebereich des Hintergrundbildes angezeigt werden, und angezeigte Inhalte abzufangen, die in den gespiegelten angezeigten Inhalten enthalten sind und durch den Client-Schnappschuss bedeckt werden.

11. Oberflächeneditor nach Anspruch 8, wobei
wenn der Anzeigemodus die Kachelung ist, das Anzeigemodul ferner konfiguriert ist, um das Hintergrundbild von einer oberen linken Ecke des Anzeigebereichs des Hintergrundbildes an in der Art der Kachelung anzuzeigen;
wenn der Anzeigemodus die Kachelung ist, das Abfangmodul ferner konfiguriert ist, um entsprechend der Position des Client-Schnappschusses auf dem Anzeigebereich des Hintergrundbildes eine Versatzposition der oberen linken Ecke des Client-Schnappschusses auf dem Hintergrundbild, die durch die obere linke Ecke des Client-Schnappschusses verortet ist, und eine Größe eines einzelnen Hintergrundbildes zu bestimmen, und das Bereichsbild, das durch den Client-Schnappschuss entsprechend der Versatzposition bedeckt ist, abzufangen.

12. Oberflächeneditor nach Anspruch 11, wobei
wenn der Anzeigemodus die Kachelung ist, das Abfangmodul ferner konfiguriert ist, um eine Leinwand zu erzeugen, wobei 4 Hintergrundbilder auf der Leinwand in der Art von zwei Zeilen und zwei Spalten gekachelt sind, eine Versatzposition, die auf der ersten Zeile und der ersten Spalte des Hintergrundbildes verortet ist, als die obere linke Ecke des abzufangenden Bereichsbildes zu nehmen und das Bereichsbild von der Leinwand abzufangen, entsprechend der Größe des einzelnen Hintergrundbildes; und
das Aktualisierungsmodul ferner konfiguriert ist, um die Oberfläche des Clients in der Art der Kachelung zu aktualisieren, indem es das Bereichsbild verwendet, das von der Leinwand abgefangen wird.

## Revendications

1. Procédé d'édition d'un habillage d'un client, comprenant :
l'affichage d'une image d'arrière-plan sur une zone d'affichage d'image d'arrière-plan (101) ;
la configuration d'un arrière-plan du client pour qu'il soit transparent, et la génération d'une capture d'écran de client (101), la capture d'écran de client étant inférieure à la zone d'affichage d'image d'arrière-plan ;
lors du déplacement de la capture d'écran de client sur la zone d'affichage d'image d'arrière-plan, la détermination d'un emplacement de la capture d'écran de client sur la zone d'affichage d'image d'arrière-plan, l'interception d'une image de zone couverte par la capture d'écran de client en fonction de l'emplacement (102) créant un aperçu de l'habillage édité ; et
la mise à jour de l'habillage de client en fonction de l'image de zone interceptée (103) ;
l'affichage de l'image d'arrière-plan sur la zone d'affichage d'image d'arrière-plan comprenant :
la détermination si un mode d'affichage est une mosaïque ou un remplissage des bords en fonction d'une taille de l'image d'arrière-plan ; ou
la réception d'information concernant le mode d'affichage ; et
l'affichage de l'image d'arrière-plan sur la zone d'affichage d'image d'arrière-plan en fonction du mode d'affichage déterminé ou de l'information reçue concernant le mode d'affichage,
l'étape d'interception comprenant la réalisation d'une synthèse d'images sur l'image de zone et la capture d'écran de client et comprenant en outre, lorsque le mode d'affichage est le remplissage des bords et que toutes les parties d'une zone de la capture d'écran de client sont incluses dans une zone de l'image de zone interceptée, l'obtention de contenus d'image de zone interceptée, et l'utilisation des contenus d'image de zone interceptée obtenus pour former un aperçu de l'habillage édité ;
lorsque le mode d'affichage est le remplissage des bords, et qu'une partie d'une zone de la capture d'écran de client est incluse dans la zone de l'image de zone interceptée, l'obtention du contenu d'image de zone interceptée, et l'utilisation du contenu d'image de zone interceptée obtenu et de la couleur moyenne de l'image d'arrière-plan pour former un aperçu de l'habillage édité ; ou
lorsque le mode d'affichage est la mosaïque, l'affichage de l'image de zone interceptée sur une zone de la capture d'écran de client à la manière d'une mosaïque pour former un aperçu de l'habillage édité, et
la mise à jour de l'habillage du client en fonction de l'image de zone interceptée comprenant :
lors de la réception d'une commande de la part de l'utilisateur donnant l'instruction de prendre l'image de zone interceptée comme habillage du client, l'utilisation de l'image de zone interceptée pour mettre à jour l'habillage du client (309, 709).

2. Procédé selon la revendication 1, dans lequel, lorsque le mode d'affichage est le remplissage des bords, l'affichage de l'image d'arrière-plan comprend :
lorsque chaque longueur latérale de l'image d'arrière-plan est inférieure ou égale à une longueur latérale correspondante de la zone d'affichage d'image d'arrière-plan, l'affichage de l'image d'arrière-plan depuis un coin gauche supérieur de la zone d'affichage d'image d'arrière-plan (402) ;
lorsqu'une longueur latérale de l'image d'arrière-plan est supérieure à une longueur latérale correspondante de la zone d'affichage d'image d'arrière-plan, la réalisation d'une compression proportionnelle sur la taille de l'image d'arrière-plan de manière à ce que chaque longueur latérale de l'image d'arrière-plan soit inférieure ou égale à la longueur latérale correspondante de la zone d'affichage d'image d'arrière-plan (403), et l'affichage de l'image d'arrière-plan compressée depuis le coin gauche supérieur de la zone d'affichage d'image d'arrière-plan (404) ; et
le remplissage de chaque partie de la zone d'affichage d'image d'arrière-plan qui n'est pas couverte par l'image d'arrière-plan avec une couleur moyenne de l'image d'arrière-plan (405).

3. Procédé selon la revendication 1, dans lequel, lorsque le mode d'affichage est le remplissage des bords, l'affichage de l'image d'arrière-plan comprend :
la réalisation d'un processus de réflexion symétrique à l'axe sur les contenus affichés depuis un bord supérieur de la zone d'affichage d'image d'arrière-plan vers le bas jusqu'à une première plage prédéterminée en prenant le bord supérieur de la zone d'affichage d'image d'arrière-plan comme axe de symétrie (501) ;
la réalisation du processus de réflexion symétrique à l'axe sur des contenus affichés depuis un bord gauche de la zone d'affichage d'image d'arrière-plan vers la droite jusqu'à une seconde plage prédéterminée en prenant le bord gauche de la zone d'affichage d'image d'arrière-plan comme axe de symétrie (502) ;
la réalisation d'un processus de réflexion symétrique au centre sur des contenus affichés sur une partie coupée des première et seconde plages prédéterminées en prenant le coin gauche supérieur de la zone d'affichage d'image d'arrière-plan comme centre symétrique (503) ;
la mise en tampon de contenus affichés sur la zone d'affichage d'image d'arrière-plan, et la réflexion de contenus affichés obtenus après réalisation d'un processus de réflexion (504) ;
l'interception de l'image de zone couverte par la capture d'écran de client comprenant :
l'interception des contenus affichés sur la zone d'affichage d'image d'arrière-plan, et de contenus affichés qui sont inclus dans les contenus affichés réfléchis et couverts par la capture d'écran de client.

4. Procédé selon la revendication 1, dans lequel, lorsque le mode d'affichage est la mosaïque, l'affichage d'image d'arrière-plan comprend :
l'affichage de l'image d'arrière-plan depuis le coin gauche supérieur de la zone d'affichage d'image d'arrière-plan à la manière de la mosaïque ;
l'interception de la zone d'image couverte par la capture d'écran de client comprenant :
la détermination d'un emplacement décalé du coin gauche supérieur de la capture d'écran de client sur l'image d'arrière-plan, qui est localisé par le coin gauche supérieur de la capture d'écran de client en fonction de l'emplacement de la capture d'écran de client sur la zone d'affichage d'image d'arrière-plan, et d'une taille d'une seule image d'arrière-plan (902), et l'interception de l'image de zone couverte par la capture d'écran de client en fonction de l'emplacement décalé (903).

5. Procédé selon la revendication 4, dans lequel l'interception de l'image de zone couverte par la capture d'écran de client en fonction de l'emplacement décalé comprend :
la génération d'une toile à l'avance, 4 images d'arrière-plan étant mises en mosaïque sur la toile à la manière de deux rangées et deux colonnes ;
la prise de l'emplacement décalé, qui se situe sur la première rangée et la première colonne de l'image d'arrière-plan, comme coin gauche supérieur de l'image de zone à intercepter ; et
l'interception de l'image de zone à partir de la toile en fonction de la taille de la seule image d'arrière-plan ;
l'affichage de l'image de zone interceptée sur une zone de la capture d'écran de client à la manière d'une mosaïque pour former un aperçu de l'habillage édité comprenant :
la mise à jour de l'habillage du client à la manière de la mosaïque en utilisant l'image de zone interceptée depuis la toile.

6. Procédé selon la revendication 1, comprenant en outre :
pendant un processus de déplacement de la capture d'écran de client, la détermination s'il y a un nombre prédéterminé de pixels chevauchés par la capture d'écran de client et la zone d'affichage d'image d'arrière-plan ;
s'il est déterminé qu'il y a un nombre prédéterminé de pixels chevauchés par la capture d'écran de client et la zone d'affichage d'image d'arrière-plan, l'autorisation de déplacement de la capture d'écran de client ;
s'il est déterminé qu'il n'y a pas de nombre prédéterminé de pixels chevauchés par la capture d'écran de client et la zone d'affichage d'image d'arrière-plan, l'interdiction du déplacement de la capture d'écran de client.

7. Procédé selon la revendication 1, dans lequel la configuration d'un arrière-plan du client pour qu'il soit transparent comprend :
la configuration d'une valeur Alpha d'une image avec un canal Alpha dans le client pour qu'elle soit 0.

8. Éditeur d'habillage d'un client, comprenant un module de génération de capture d'écran, un module d'affichage, un module d'interception et un module de mise à jour ; dans lequel
le module de génération de capture d'écran (1101) est configuré pour configurer un arrière-plan du client pour qu'il soit transparent, et générer une capture d'écran de client, la capture d'écran de client étant inférieure à la zone d'affichage d'image d'arrière-plan ;
le module d'affichage (1102) est configuré pour afficher la capture d'écran de client, et afficher une image d'arrière-plan sur une zone d'affichage d'image d'arrière-plan ;
le module d'interception (1103) est configuré pour déterminer un emplacement de la capture d'écran de client sur la zone d'affichage d'image d'arrière-plan lorsque la capture d'écran de client est déplacée sur la zone d'affichage d'image d'arrière-plan, et intercepter une zone d'image couverte par la capture d'écran de client créant un aperçu de l'habillage édité en fonction de l'emplacement ; et
le module de mise à jour (1104) est configuré pour mettre à jour un habillage du client en fonction de l'image de zone interceptée ;
le module d'affichage est en outre configuré pour déterminer si un mode d'affichage est une mosaïque ou un remplissage des bords en fonction d'une taille de l'image d'arrière-plan ou recevoir une information concernant le mode d'affichage, et afficher l'image d'arrière-plan sur la zone d'affichage d'image d'arrière-plan en fonction du mode d'affichage déterminé ou de l'information reçue concernant le mode d'affichage ;
l'éditeur d'habillage comprend en outre un module de prévisualisation configuré pour, lorsque le mode d'affichage est le remplissage des bords et que toutes les parties d'une zone de la capture d'écran de client sont incluses dans une zone de l'image de zone interceptée, obtenir des contenus d'image de zone interceptée, et utiliser les contenus d'image de zone interceptée obtenue pour former un aperçu de l'habillage édité ; lorsque le mode d'affichage est le remplissage des bords et qu'une partie d'une zone de la capture d'écran de client est incluse dans la zone de l'image de zone interceptée, obtenir le contenu d'image de zone interceptée, et utiliser le contenu d'image de zone interceptée obtenu et une couleur moyenne de l'image d'arrière-plan pour former un aperçu de l'habillage édité ; ou, lorsque le mode d'affichage est la mosaïque, afficher l'image de zone interceptée sur une zone de la capture d'écran de client à la manière d'une mosaïque pour former un aperçu de l'habillage édité ;
le module de mise à jour (1104) est configuré pour, à la réception d'une commande de l'utilisateur donnant l'instruction de prendre l'image de zone interceptée comme habillage du client, utiliser l'image de zone interceptée pour mettre à jour l'habillage du client.

9. Éditeur d'habillage selon la revendication 8, dans lequel,
lorsque le mode d'affichage est le remplissage des bords, et que chaque longueur latérale de l'image d'arrière-plan est inférieure ou égale à une longueur latérale correspondante de la zone d'affichage d'image d'arrière-plan, le module d'affichage est en outre configuré pour afficher l'image d'arrière-plan depuis un coin gauche supérieur de la zone d'affichage d'image d'arrière-plan ;
lorsqu'une longueur latérale de l'image d'arrière-plan est supérieure à une longueur latérale correspondante de la zone d'affichage d'image d'arrière-plan, le module d'affichage est en outre configuré pour réaliser une compression proportionnelle sur la taille de l'image d'arrière-plan de manière à ce que chaque longueur latérale l'image d'arrière-plan soit inférieure ou égale à la longueur latérale correspondante de la zone d'affichage d'image d'arrière-plan, et le module d'affichage est en outre configuré pour afficher l'image d'arrière-plan compressée depuis le coin gauche supérieur de la zone d'affichage d'image d'arrière-plan, et pour remplir chaque partie de la zone d'affichage d'image d'arrière-plan qui n'est pas couverte par l'image d'arrière-plan avec une couleur moyenne de l'image d'arrière-plan.

10. Éditeur d'habillage selon la revendication 8, dans lequel le module d'affichage comprend un module de réflexion et un module de mise en tampon,
le module de réflexion est configuré pour réaliser un processus de réflexion symétrique à l'axe sur des contenus qui sont affichés depuis un bord supérieur de la zone d'affichage d'imagent d'arrière-plan vers le bas jusqu'à une première plage prédéterminée en prenant le bord supérieur de la zone d'affichage d'image d'arrière-plan comme axe de symétrie ;
le module de réflexion est en outre configuré pour réaliser le processus de réflexion symétrique à l'axe sur des contenus qui sont affichés depuis un bord gauche de la zone d'affichage d'image d'arrière-plan vers la droite jusqu'à une seconde plage prédéterminée en prenant le bord gauche de la zone d'affichage d'image d'arrière-plan comme axe de symétrie ;
le module de réflexion est en outre configuré pour réaliser un processus de réflexion symétrique au centre sur des contenus qui sont affichés sur une partie coupée des première et seconde plage prédéterminées en prenant le bord gauche supérieur de la zone d'affichage d'image d'arrière-plan comme centre symétrique ;
le module de mise en tampon est configuré pour mettre en tampon des contenus affichés sur la zone d'affichage d'image d'arrière-plan, et réfléchir des contenus affichés obtenus après la réalisation d'un processus de réflexion ; et
le module d'interception est en outre configuré pour intercepter les contenus affichés sur la zone d'affichage d'image d'arrière-plan et les contenus affichés qui sont inclus dans les contenus affichés réfléchis et couverts par la capture d'écran de client.

11. Éditeur d'habillage selon la revendication 8, dans lequel,
lorsque le mode d'affichage est la mosaïque, le module d'affichage est en outre configuré pour afficher l'image d'arrière-plan depuis un coin gauche supérieur de la zone d'affichage d'image d'arrière-plan à la manière d'une mosaïque ;
lorsque le mode d'affichage est la mosaïque, le module d'interception est en outre configuré pour déterminer un emplacement décalé du coin gauche supérieur de la capture d'écran de client sur l'image d'arrière-plan qui est localisé par le coin gauche supérieur de la capture d'écran de client en fonction de l'emplacement de la capture d'écran de client sur la zone d'affichage d'image d'arrière-plan et d'une taille d'une seule image d'arrière-plan et intercepter l'image de zone couverte par la capture d'écran de client en fonction de l'emplacement décalé.

12. Éditeur d'habillage selon la revendication 11, dans lequel,
lorsque le mode d'affichage est la mosaïque, le module d'interception en outre configuré pour générer une toile, 4 images d'arrière-plan étant mises en mosaïque sur la toile à la manière de deux rangées et deux colonnes, prendre un emplacement décalé qui est situé sur la première rangée et la première colonne de l'image d'arrière-plan comme coin gauche supérieur de l'image de zone à intercepter, et intercepter l'image de zone depuis la toile en fonction de la taille de la seule image d'arrière-plan ; et
le module de mise à jour est en outre configuré pour mettre à jour l'habillage du client à manière d'une mosaïque en utilisant l'image de zone interceptée depuis la toile.
